# FASCICULE DE BREVET EUROPEEN

(11) **EP 4 161 331 B1**
(45) Date de publication et mention de la délivrance du brevet: **04.12.2024**
(21) Numéro de dépôt: 21731119.0
(22) Date de dépôt: 04.06.2021
(51) Int. Cl.: A47J 43/07, A47J 45/06

(54) **RECIPIENT DE PREPARATION CULINAIRE MUNI D'UNE POIGNEE FACILITANT LE DEVERSEMENT ET LE RACLAGE DE LA PREPARATION CULINAIRE**
LEBENSMITTELZUBEREITUNGSGEFÄSS MIT EINEM GRIFF ZUR UNTERSTÜTZUNG DES AUSGIESSENS UND AUSSCHÄLENS DER LEBENSMITTELZUBEREITUNG
FOOD PREPARATION VESSEL PROVIDED WITH A HANDLE ASSISTING THE POURING AND SCRAPING OUT OF THE FOOD PREPARATION

(30) Priorité: 05.06.2020 FR 2005920
(43) Date de publication de la demande: 12.04.2023
(73) Titulaire: SEB S.A., 69130 Ecully (FR)
(72) Inventeur: DESHAYES, Jean-Louis, 53440 La Chapelle-au-Riboul (FR); NESPOUX, Johan, 53640 Le Horps (FR); BESSE, Aurélie, 72350 Brulon (FR)
(74) Mandataire: SEB Développement
(86) Numéro de dépôt international: PCT/EP2021/065064
(87) Numéro de publication internationale: WO 2021/245270

(56) Documents cités:
- EP-A1- 2 777 456
- EP-A1- 3 210 503
- WO-A1-2017/144907
- WO-A1-2018/026972
- CN-U- 204 158 184
- FR-A- 1 062 774
- US-A1- 2004 200 851

## Description

### Domaine technique

La présente invention concerne un récipient de préparation culinaire permettant de contenir des aliments en vue de les cuisiner. L'invention concerne aussi un appareil de préparation culinaire qui comprend un tel récipient de préparation culinaire.

L'invention a pour objectif principal de faciliter la manipulation du récipient de préparation culinaire durant son usage, tout particulièrement lors du déversement ou du raclage de la préparation culinaire réalisée à partir des aliments et contenue dans ledit récipient de préparation culinaire.

### Etat de la technique

Les appareils de préparation culinaire sont bien connus de l'homme de métier. Un tel appareil de préparation culinaire peut comprendre une base qui réceptionne un récipient de préparation culinaire permettant de contenir des aliments afin de les cuisiner. L'appareil de préparation culinaire peut comprendre également un ou plusieurs outils de travail, par exemple un malaxeur ou mélangeur, une pale de brassage, des couteaux hachoirs, un batteur, un pétrisseur ou un concasseur. L'outil de travail est placé dans le récipient de préparation culinaire et accouplé un organe d'entraînement en rotation, lui-même accouplé avec un dispositif d'entraînement en rotation présent sur la base. La base et le récipient de préparation culinaire peuvent également être conçus pour réaliser des préparations culinaires chaudes, par exemple des soupes, des purées ou des plats mijotés, un dispositif de chauffe agencé sur la base et/ou sur le récipient de préparation culinaire permettant alors de chauffer ledit récipient de préparation culinaire pour le chauffage ou la cuisson des aliments contenus dans celui-ci.

Le récipient de préparation culinaire comprend un contenant qui présente un bord supérieur définissant une ouverture principale par laquelle sont introduits les aliments dans le contenant. Le contenant peut également comprendre un bec verseur agencé sur son bord supérieur. Ce récipient de préparation culinaire est généralement muni d'une ou de deux poignées de maintien agencées sur un contour supérieur du contenant, afin de manipuler ledit contenant en le maintenant dans une position normale selon laquelle l'ouverture principale demeure en partie haute du contenant, ce qui empêche le déversement des aliments ou de la préparation culinaire. Lorsque la préparation culinaire est prête à être servie, le cuisinier peut par exemple utiliser une cuillère ou une louche pour extraire la préparation culinaire et la verser dans un plat ou un récipient de préparation culinaire de service ; le cuisinier peut aussi parfois déverser la préparation culinaire dans un plat ou un récipient de préparation culinaire de service, en inclinant le contenant. Lorsque le fond de la préparation culinaire doit être déversé dans le plat ou le contenant de service, ou lorsque ladite préparation culinaire est pâteuse et adhère à la paroi interne du contenant, le cuisinier utilise généralement une spatule afin de racler ladite paroi interne et de déverser le reste de la préparation culinaire. Le cuisinier maintient donc la ou l'une des deux poignées de maintien avec une main et il manipule la spatule avec l'autre main. La manipulation du récipient de préparation culinaire avec une main peut s'avérer difficile dans ces circonstances, d'autant plus lorsque le récipient de préparation culinaire est lourd, la posture du cuisinier durant cette phase de raclage n'étant pas confortable et la prise en main de la poignée n'étant pas aisée. Le cuisinier peut, en conséquence, mettre une partie de sa main en contact avec la paroi externe du contenant et se brûler, lorsque cette paroi externe est chaude.

Il est connu le modèle d'utilité chinois publié sous le numéro CN204158184U, lequel divulgue un récipient de préparation culinaire qui comprend un contenant comprenant un bord supérieur muni d'une ouverture principale, ledit récipient de préparation culinaire comprenant deux premières poignées plates disposées en opposition autour du contenant et permettant la manipulation dudit contenant dans une position normale selon laquelle l'ouverture principale demeure en partie haute. En outre, le récipient de préparation culinaire comprend une seconde poignée constituée d'un manche fixé au contour supérieur du contenant avec une inclinaison vers le bas, le manche étant configuré pour être saisi en pleine et pour maintenir le contenant dans une position facilitant le déversement de la préparation culinaire.

Cette mise en oeuvre solutionne en partie les inconvénients précités, mais demeure toutefois insatisfaisante, la posture du cuisinier n'étant pas optimale dans tous les cas d'utilisation, par exemple durant le raclage du contenant au moyen d'une spatule.

### Exposé de l'invention

L'invention a pour objectif de pallier les inconvénients précités. A cet effet, l'invention concerne un récipient de préparation culinaire tel que défini dans la revendication 1.

De manière remarquable, selon l'invention, le récipient de préparation culinaire comprend une seconde poignée de maintien montée sur le contour supérieur du contenant. Cette seconde poignée de maintien comporte un corps muni d'une face inférieure qui présente une cavité s'étendant en profondeur dans ledit corps, ladite cavité étant configurée pour y loger au moins les phalanges distales, de préférence les phalanges distales et médianes, d'au moins les trois doigts médians d'une main et permettre un maintien en suspension dudit contenant au moyen desdites phalanges distales et éventuellement médianes, dans une position inclinée de déversement ou de raclage de la préparation culinaire. En d'autres termes, la cavité sur la face inférieure du corps est prononcée pour former dans ce corps un espace suffisant pour y loger au moins les phalanges distales d'au moins les trois doigts intermédiaires d'une main, c'est-à-dire l'index, le majeur et l'annulaire, de préférence les phalanges distales et médianes de ces trois doigts, ledit espace étant accessible par la face inférieure du corps. On entend par « au moins les trois doigts médians » le fait que la cavité pourra éventuellement permettre d'y loger également la phalange distale et éventuellement la phalange médiane de l'auriculaire de la main, en plus de l'index, du majeur et de l'annulaire, soit parce que ladite cavité aura été configurée à cet effet soit parce que la largeur totale desdits doigts de la main le permet.

Ainsi, le cuisinier peut saisir la seconde poignée de maintien en insérant dans la cavité les phalanges distales et, de préférence, aussi les phalanges médianes des trois doigts médians de la main, voire également de l'auriculaire, et en plaçant sa paume de main autour du contour externe du corps de cette seconde poignée de maintien, puis ledit cuisinier soulève le récipient de préparation culinaire grâce auxdites phalanges placées dans la cavité, le contenant en suspension prenant alors naturellement une position inclinée en équilibre selon laquelle l'ouverture principale est basculée vers le bas du côté opposé à la seconde poignée de maintien et demeure en équilibre dans un plan incliné situé entre l'horizontal et la verticale. Selon cette conception, le cuisinier peut soulever le contant avec une main et orienter l'ouverture principale du contenant face à lui ou légèrement décalée sur le côté, dans ladite position inclinée, sans devoir exercer un effort avec le poignet de cette main, ce qui lui permet de visualiser l'intérieur du contenant et de racler les parois internes de son contour et de son fond en manipulant une spatule avec l'autre main. Par ailleurs, cette manipulation du contenant s'effectue sans risque de toucher sa paroi externe avec la main, puisque les phalanges distales et éventuellement médianes des trois doigts médians de la main, voire aussi de l'index, son placées dans la cavité et que le reste de la main est éloignée de cette paroi externe, ce qui empêche les risques de brûlure lorsque ladite paroi externe est chaude.

Selon une réalisation du récipient de préparation culinaire objet de l'invention, celui-ci comprend deux premières poignées de maintien disposées en opposition sur le contour supérieur du contenant. Ainsi, le cuisinier peut saisir à deux mains le contenant en conservant son ouverture principale dans la position normale, ce qui soulage le transport du récipient de préparation culinaire dans ladite position normale lorsque le contenant est empli d'aliments ou de la préparation culinaire, en particulier pour des contenants de volume important, par exemple un volume de deux à cinq litres. Bien entendu, l'invention peut être mise en oeuvre sur des récipients de préparation culinaires comprenant une seule première poignée de maintien, par exemple du type casserole ou du type bol de mixeur.

De préférence, selon cette réalisation précitée du récipient de préparation culinaire, la seconde poignée de maintien est disposée entre soixante degrés (60°) et cent-vingt degrés (120°), de préférence à quatre-vingt-dix degrés (90°), par rapport aux deux premières poignées de maintien, autour du contour supérieur du contenant.

Selon une première réalisation du récipient de préparation culinaire, lorsque celui-ci comprend deux premières poignées de maintien, lesdites deux premières poignées de maintien sont reliées entre elles par une pièce de pourtour en demi-cercle épousant le contour supérieur du contenant, la seconde poignée de maintien étant agencée sur la pièce de pourtour.

Selon une seconde réalisation du récipient de préparation culinaire, que celui-ci comprenne une ou plusieurs premières poignées de maintien, la seconde poignée de maintien est indépendante de l'au moins une première poignée de maintien. De préférence, selon cette réalisation du récipient de préparation culinaire, le corps de la seconde poignée de maintien comprend une pièce supérieure et une pièce inférieure fixées entre elles et fixées au contour supérieur du contenant grâce à une système d'assemblage, la pièce inférieure comprenant la cavité.

Selon le récipient de préparation culinaire objet de l'invention, la partie du contour supérieur du contenant disposée à l'opposé de la seconde poignée de maintien est dépourvue de l'au moins une première poignée de maintien. Cela permet d'éviter que de la préparation culinaire se déverse sur la première poignée de maintien lorsque le cuisiner manipule le contenant en le tenant par la seconde poignée de maintien et procède au déversement ou au raclage de la préparation culinaire. De préférence, le bord supérieur du contenant comprend un bec verseur disposé à l'opposé de la seconde poignée de maintien, afin de faciliter le déversement de la préparation culinaire.

Selon une réalisation préférentielle du récipient de préparation culinaire objet de l'invention, la cavité sur le corps de la seconde poignée de maintien est configurée pour suspendre le contenant avec une inclinaison comprise entre soixante degrés (60°) et quatre-vingts degrés (80°) par rapport à la verticale, de préférence soixante-dix degrés (70°) par rapport à la verticale. Cela permet une visualisation et un accès convenables à l'intérieur du contenant dans sa position inclinée.

Selon une réalisation du récipient de préparation culinaire objet de l'invention, celui-ci comprend un couvercle de fermeture apte à fermer l'ouverture principale du contenant. En outre, un système de verrouillage est agencé entre le couvercle et l'au moins une première poignée de maintien pour placer le couvercle dans une position verrouillée selon laquelle ledit couvercle ferme l'ouverture principale du contenant et reste bloqué dans cette position fermée et une position déverrouillée selon laquelle le couvercle peut être retiré du contenant afin d'accéder à l'ouverture principale. Cela permet de sécuriser la fermeture du récipient de préparation culinaire, par exemple durant la cuisson des aliments placés dans le contenant, voire durant la transformation des aliments placés dans le contenant au moyen d'un outil de travail rotatif. De préférence, selon cette réalisation, le récipient de préparation culinaire comprend un système de repérage de la position verrouillée et de la position déverrouillée du couvercle, le système de repérage étant agencé entre le couvercle et la seconde poignée de maintien. Cela permet de vérifier visuellement que la fermeture du contenant au moyen du couvercle est convenablement réalisée.

Selon une réalisation du récipient de préparation culinaire objet de l'invention, le contenant comprend un fond comportant une ouverture centrale apte à recevoir un organe d'entraînement en rotation, ledit organe d'entraînement en rotation étant apte à entraîner en rotation un outil de travail rotatif, amovible ou non par rapport à l'organe d'entraînement en rotation, ledit outil de travail rotatif étant placé dans ledit contenant. Cet outil de travail rotatif pourra être, par exemple, un malaxeur ou mélangeur, une pale de brassage, des couteaux hachoirs, un batteur, un pétrisseur ou un concasseur. Un tel récipient de préparation culinaire équipera un appareil de préparation culinaire qui dispose également d'une base de réception dudit récipient de préparation culinaire.

Selon une réalisation du récipient de préparation culinaire objet de l'invention, le contenant est conçu dans une matière métallique, si désiré revêtue, de préférence en acier inoxydable, ou encore en alliage d'aluminium revêtu, par exemple de PTFE. En outre, l'au moins une première poignée de maintien et la seconde poignée de maintien sont conçues dans une matière isolante thermiquement, de préférence en Bakélite^{®}, en PBT ou en PP chargé fibres de verre. Un tel récipient de préparation culinaire est conçu pour être chauffé au moyen d'un dispositif de chauffe, afin de réaliser une cuisson des aliments placés dans le contenant.

Le récipient de préparation culinaire selon l'invention pourrait être conçu pour être positionnée dans un four ou sur une plaque chauffante, afin de réaliser une cuisson des aliments placés dans le contenant en vue de l'obtention de la préparation culinaire. Toutefois, de préférence, le récipient de préparation culinaire sera mis en oeuvre sur un appareil de préparation culinaire à part entière, pour la réalisation de préparation culinaire chaude voire pour la réalisation de préparation culinaire froide. A cet effet, l'invention concerne également un appareil de préparation culinaire, lequel comprend un récipient de préparation culinaire présentant l'une et/ou l'autre des caractéristiques précitées et une base configurée pour réceptionner le récipient de préparation culinaire.

Selon une réalisation de l'appareil de préparation culinaire, le récipient de préparation culinaire comprend un contenant conçu dans une matière assurant une conduction thermique et dont le fond comporte une ouverture centrale. L'au moins une première poignée de maintien et la seconde poignée de maintien du récipient de préparation culinaire sont conçues dans une matière isolante thermiquement. En outre, l'appareil de préparation culinaire comprend au moins un outil de travail rotatif apte à être placé dans le contenant en l'introduisant par son ouverture principale et un organe d'entraînement en rotation apte à être monté de manière étanche sur l'ouverture centrale du fond du contenant pour entraîner l'outil de travail rotatif placé dans ledit contenant. Par ailleurs, l'appareil de préparation culinaire comprend un dispositif de chauffe du fond du contenant et un dispositif d'entrainement en rotation de l'organe d'entraînement en rotation monté sur ledit fond, lorsque le récipient de préparation culinaire est monté sur ladite base. L'outil de travail rotatif pourra être, par exemple, un malaxeur ou mélangeur, une pale de brassage, des couteaux hachoirs, un batteur, un pétrisseur ou un concasseur.

Selon un premier mode de réalisation, le récipient de préparation culinaire peut comporter le dispositif de chauffe, lequel sera agencé dans le fond du récipient de préparation culinaire, sous le fond du contenant. Selon un deuxième mode de réalisation, la base peut comporter le dispositif de chauffe qui chauffe le contenant lors du positionnement du récipient de préparation culinaire sur la base. Ce dispositif de chauffe pour comprendre un organe électrique chauffant du type résistif ou un dispositif de chauffage par induction.

### Brève description des figures

Les caractéristiques et avantages de l'invention apparaîtront à la lecture de la description suivante s'appuyant sur des figures, parmi lesquelles :
[Fig. 1] La figure 1 illustre une vue d'ensemble d'un mode de réalisation non limitatif d'un appareil de préparation culinaire ;
[Fig. 2] La figure 2 illustre une vue d'ensemble d'un récipient de préparation culinaire destiné à être mis en oeuvre sur l'appareil de préparation culinaire de la figure 1, ledit récipient de préparation culinaire étant dans une position normale ;
[Fig. 3] La figure 3 illustre en partie le récipient de préparation culinaire de la figure 2, sur laquelle la seconde poignée de maintien apparaît en vue éclatée ;
[Fig. 4] La figure 4 illustre selon un premier angle de vue une pièce supérieure du corps de la seconde poignée de maintien ;
[Fig. 5] La figure 5 illustre selon un second angle de vue ladite pièce supérieure de la figure 4 ;
[Fig. 6] La figure 6 illustre selon un premier angle de vue une pièce inférieure du corps de la seconde poignée de maintien ;
[Fig. 7] La figure 7 illustre selon un second angle de vue ladite pièce inférieure de la figure 6 ;
[Fig. 8] La figure 8 illustre en coupe le récipient de préparation culinaire de la figure 2, placé en équilibre dans une position inclinée selon laquelle il est maintenu en suspension par la seconde poignée de maintien.

### Description détaillée de l'invention

Dans la suite de la description, les termes « supérieur », « inférieur », « haut », « bas », « avant », « arrière », « latéral », « vertical », « horizontal », qui pourraient être utilisés dans la présente description, le seront en considération de la position normale des éléments de l'appareil de préparation culinaire placé dans une configuration fonctionnelle, face à l'utilisateur sur une table ou un plan de cuisine.

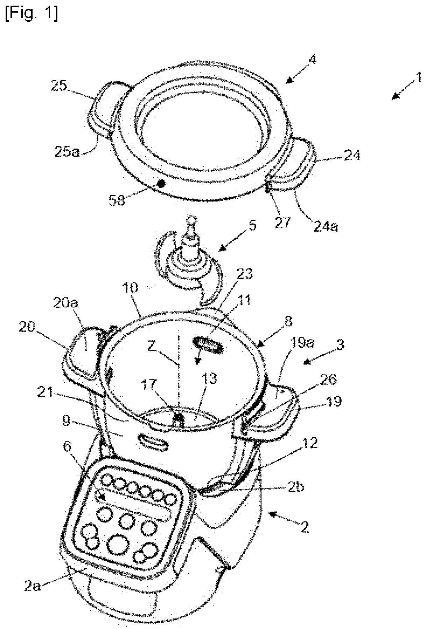

La figure 1 illustre un exemple de réalisation d'un appareil de préparation culinaire 1 comprenant une base 2, un récipient de préparation culinaire 3, un couvercle 4 et un outil de travail rotatif 5. La base 2 comprend en façade 2a un clavier 6 qui permet notamment d'effectuer une sélection du mode de préparation culinaire à réaliser, par exemple la préparation d'une sauce, d'une soupe, d'une pâte, d'une mousse dessert, d'une crème chantilly ou d'une purée de légumes, la réalisation d'une cuisson vapeur ou d'une cuisson en immersion, mais aussi d'effectuer la mise en marche de l'outil de travail rotatif 5, la mise en marche d'un mode de maintien au chaud du récipient de préparation culinaire 3 et la mise en marche d'une minuterie. Bien entendu, ces différents programmes de fonctionnement ne sont pas limitatifs sur l'appareil de préparation culinaire 1 objet de l'invention. Ces différents programmes seront lancés et contrôlés grâce à un circuit de commande (non illustré) incorporé dans la base 2.

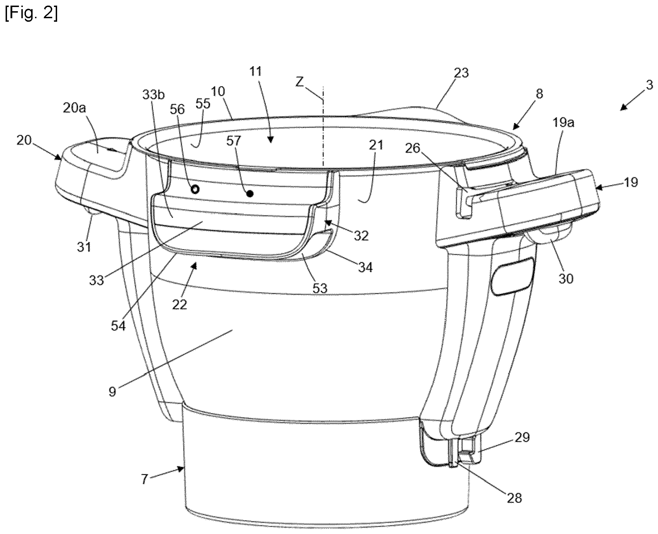

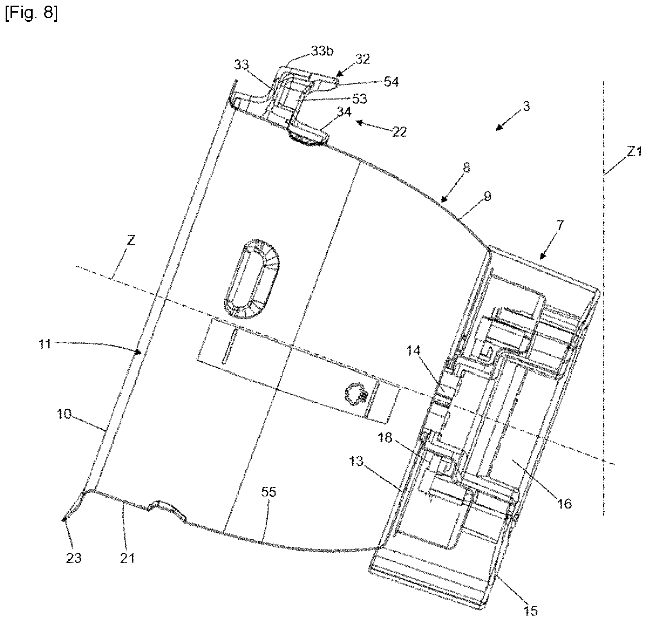

En regard des figures 1 et 2, le récipient de préparation culinaire 3 comprend une embase 7 agencée à une extrémité inférieure d'un contenant 8, ce contenant 8 permettant la réception d'aliments servant à la réalisation d'une préparation culinaire. Le contenant 8 comprend un contour 9 qui est délimité par un bord supérieur 10 définissant une ouverture principale 11 par laquelle sont introduits les aliments dans le contenant 8 et est déversée la préparation culinaire obtenue. L'embase 7 vient s'emboîter dans un logement 12 sur le côté supérieur 2b de la base 2, ce qui permet d'enclencher le récipient de préparation culinaire 3 sur la base 2. Le contenant 8 comprend un fond 13 qui est muni d'une ouverture centrale 14, tel qu'illustré en figure 8, cette ouverture centrale 14 étant accessible par l'ouverture principale 11 du contenant 8, d'une part, et par la face inférieure 15 de l'embase 7 qui comprend un évidement central 16 débouchant sur ledit fond 13, d'autre part. Cette ouverture centrale 14 permet le montage d'un organe d'entraînement en rotation 17 sur le fond 13 du contenant 8, l'organe d'entraînement en rotation 17 disposant d'un système de fixation à baïonnette (non illustré) pour réaliser ledit montage et d'un joint d'étanchéité (non illustré) pour réaliser une étanchéité sur le fond 13 du contenant 8 au niveau de cette ouverture centrale 14. Cet organe d'entraînement en rotation 17 permet d'entraîner en rotation l'outil de travail rotatif 5 selon un axe Z, comme cela apparaît en regard de la figure 1. L'organe d'entraînement en rotation 17 est lui-même entraîné en rotation selon l'axe Z au moyen d'un dispositif motorisé (non illustré) logé dans la base 2, le dispositif motorisé comprenant par exemple un moteur électrique dont l'arbre rotor est accouplé avec ledit organe d'entraînement en rotation 9 au moyen d'un système d'accouplement, par exemple du type cannelure, ledit système d'accouplement étant mis en place lors de l'engagement de l'embase 7 du récipient de préparation culinaire 3 dans le logement 12 sur la base 2.

Le récipient de préparation culinaire 3 peut être configuré pour contenir des aliments chauds, voire pour chauffer des aliments dans le contenant 8. A cet effet le contenant 8 peut être réalisé dans une matière métallique, si désiré revêtue, de préférence en acier inoxydable, ou encore en alliage d'aluminium revêtu, par exemple de PTFE. Selon un mode de réalisation, le récipient de préparation culinaire 3 comprend un organe résistif de chauffe 18 qui est agencé sous le fond 13 du contenant 8. L'organe résistif de chauffe 18 peut notamment être agencé à l'intérieur d'une semelle disposée sous le fond 13, ou sous une semelle disposée sous le fond 13. Ladite semelle est de préférence réalisée en aluminium, pour assurer une bonne conduction thermique. L'organe résistif de chauffe 18 est commandé électriquement grâce au circuit de commande (non illustré) agencé dans la base 2 et à un système de connexion par exemple de type broches électriques agencées dans l'embase 7 et venant en contact mécaniquement dans des lamelles électriques agencées sur la base 2, lors de l'emboîtement de l'embase 7 dans le logement 12 sur la base 2. Le circuit de commande gère également le contrôle du dispositif motorisé pour l'entraînement en rotation de l'outil de travail rotatif 5, les divers programmes de préparation culinaire et la minuterie, notamment. Cette mise en oeuvre d'un dispositif de chauffe du contenant sur l'appareil de préparation culinaire 1 n'est pas limitative, on pourrait par exemple prévoir l'organe résistif de chauffe 18 sur la base 2 et venant en contact ou à proximité du fond 13 du contenant 8 lors de l'emboîtement de l'embase 7 dans le logement 15, l'embase 7 étant dans ce cas configurée à cet effet. On pourrait encore prévoir un dispositif de chauffage par induction au lieu d'un organe résistif de chauffe 18, le dispositif de chauffage par induction étant agencé de préférence dans la base 2 pour chauffer le fond 13 du contenant 8 et/ou la partie inférieure du contenant 8. Le récipient de préparation culinaire 3 peut alors être dépourvu d'embase sous le contenant 8.

En regard des figures 1 et 2, le récipient de préparation culinaire 3 comprend deux premières poignées de maintien 19, 20 qui sont fixées en opposition sur une partie supérieure 21 du contour 9 du contenant 8, ces deux premières poignées de maintien 19, 20 s'étendant radialement par rapport au contour 9 qui est de préférence cylindrique. Ces deux premières poignées de maintien 19, 20 permettent de manipuler le récipient de préparation culinaire 3 avec les deux mains tout en conservant l'ouverture principale 11 du contenant 8 dans une position normale, plus ou moins horizontale, empêchant le déversement des aliments ou de la préparation culinaire obtenue à partir des aliments, hors du contenant 8. Le récipient de préparation culinaire 3 comprend également une seconde poignée de maintien 22 qui est de préférence disposée à 90° par rapport aux deux premières poignées de maintien 19, 20, ladite seconde poignée de maintien 22 étant disposée en opposition par rapport à un bec verseur 23 agencé sur le bord supérieur 10 du contenant 8. Cette seconde poignée de maintien 22 apparaît seulement sur la figure 2, mais elle sera également mise en oeuvre sur le récipient de préparation culinaire 3 de la figure 1.

Le couvercle 4 comprend également deux troisièmes poignées de maintien 24, 25 disposées en opposition et s'étendant radialement, lesdites troisièmes poignées de maintien 24, 25 ayant une forme semblable à celle des premières poignées de maintien 19, 20, comme l'illustre la figure 1. Les premières poignées de maintien 19, 20 comprennent chacune sur leur face supérieure 19a, 20a une encoche 26 qui s'étend de manière circulaire au voisinage de la partie supérieure 21 du contour 9 du contenant 8, seule l'encoche 26 sur la première poignée de maintien 19 apparaissant sur les figures 1 et 2. Les troisièmes poignées de maintien 24, 25 du couvercle 4 comprennent chacune sur leur face inférieure 24a, 25a une patte 27, seule la patte 27 sur la troisième poignée de maintien 24 apparaissant sur les figures 1 et 2. La mise en place du couvercle 4 pour la fermeture de l'ouverture principale 11 du contenant 3 s'effectue en positionnant le couvercle 4 avec les troisièmes poignées de maintien 24, 25 décalées par rapport aux premières poignées de maintien 19,20, correspondant à une position de déverrouillage, puis en effectuant une rotation du couvercle 4 selon l'axe Z de manière à venir engager les pattes 27 sur ces troisièmes poignées de maintien 24, 25 à l'intérieur des encoches 26 respectives sur les premières poignées de maintien 19, 20, jusqu'à venir en butée, ce qui correspond à une position de verrouillage du couvercle 4 sur le contenant 8. La mise en place du couvercle 4 en position de verrouillage du contenant 8 permet d'actionner une butée mécanique 28 s'étendant vers le bas à l'extérieur du contour 9 du contenant 8, ladite butée mécanique 28 actionnant un capteur de position (non illustré) agencé sur la base 2, lorsque la semelle 7 est engagée dans le logement 12 de ladite base 2.

Le récipient de préparation culinaire 3 comprend également deux pattes d'ancrage 29 qui s'étendent vers le bas en-dessous des premières poignées de maintien 19, 20, seule la patte d'ancrage 29 du côté de la première poignée de maintien 19 apparaissant en figure 2. Ces pattes d'ancrage 29 coopèrent avec des pattes d'ancrage complémentaires (non illustrées) agencées sur la base 2, pour un verrouillage du récipient de préparation culinaire 3 lorsque la semelle 7 est engagée dans le logement 12. Les pattes d'ancrage 29 sont actionnées au moyen de deux gâchettes 30, 31 respectives agencées sous les premières poignées de maintien 19, 20, afin de permettre leur dégagement des pattes d'ancrage complémentaire et de déverrouiller la semelle 7 du logement 12, afin d'extraire le récipient de préparation culinaire 3 de la base 2.

Les caractéristiques décrites précédemment, exceptées celles concernant la seconde poignée de maintien 22, se retrouvent déjà sur un appareil de préparation culinaire commercialisé par la Demanderesse sous la dénomination COMPANIONO. L'homme de métier pourra donc s'y référer pour une réalisation préférentielle de l'appareil de préparation culinaire 1 objet de l'invention incorporant, en outre, les caractéristiques relatives à la seconde poignée de maintien 22.

La description suivante porte tout particulièrement sur une mise en oeuvre préférentielle de la seconde poignée de maintien 22 sur l'appareil de préparation culinaire 1 de la figure 1. Comme précisé précédemment et illustré sur la figure 2, la seconde poignée de maintien 22 est située à quatre-vingt-dix degrés (90°) - rotation autour de l'axe Z - par rapport aux deux premières poignées de maintien 19, 20 et en vis-à-vis du bec verseur 23. Des variantes de l'appareil de préparation culinaire 1 pourraient être envisagées en plaçant la seconde poignée de maintien 22 entre soixante degrés (60°) et quatre-vingt-dix degrés (90°) par rapport à l'une des premières poignées de maintien 19 et, inversement, entre cent-vingt degrés (120°) et quatre-vingt-dix degrés (90°) par rapport à l'autre des premières poignées de maintien 20. Sur d'autres variantes de l'appareil de préparation culinaire 1 équipées d'une seule première poignée de maintien, la seconde poignée de maintien 22 pourra être également entre zéro degré (0°) et quatre-vingt-dix degrés (90°) par rapport à la première poignée de maintien et en vis-à-vis du bec verseur 23.

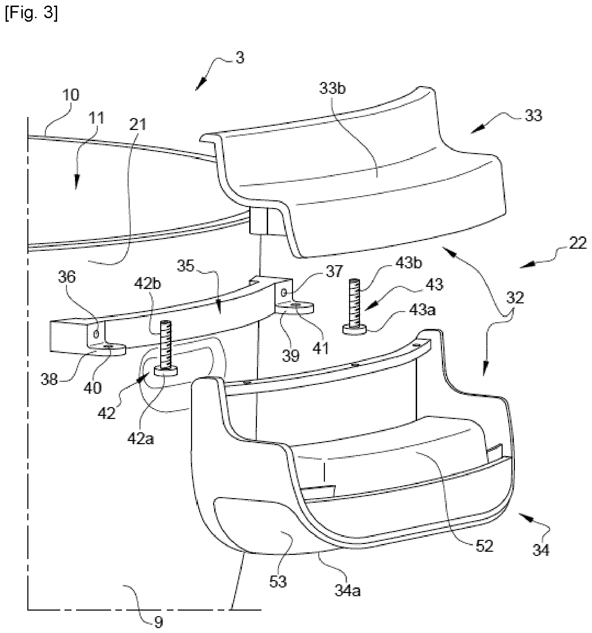

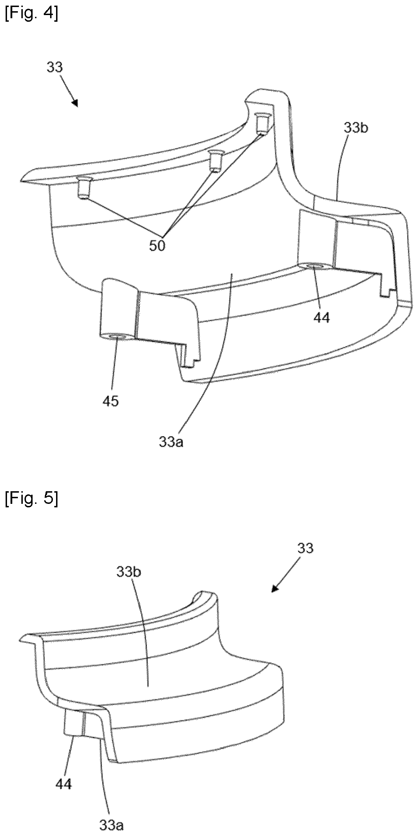

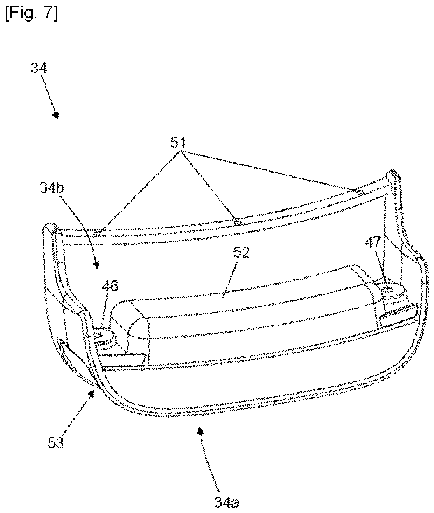

Sur le mode de réalisation illustré en figures 2 à 8, la seconde poignée de maintien 22 est composée d'un corps 32 formé d'une partie supérieure 33, d'une partie inférieure 34 et d'un pontet 35. Le pontet 35 est fixé par vissage sur la partie supérieure 21 du contour 9 du contenant 8 grâce deux vis de fixation (non illustrées) passant au travers dudit contour 9 et venant en prise sur deux trous taraudés 36, 37 du pontet 35. Le pontet 35 comprend deux pattes de support 38, 39 munies chacune d'un orifice débouchant 40, 41 permettant le passage de deux vis de fixation 42, 43. La pièce supérieure 33 comprend sur sa face inférieure 33a deux trous taraudés 44, 45 sur lesquels viennent se visser les deux vis de fixation 42, 43. La pièce inférieure 34 comprend deux trous de passage 46, 47 qui comportent, du côté de la face inférieure 34a de ladite pièce inférieure 34, un lamage 48, 49 permettant la réception des têtes 42a, 43a des vis de fixation 42, 43. L'entraxe est identique entre les deux orifices débouchants 40, 41, entre les deux trous taraudés 44, 45 et entre les deux trous de passage 46, 47. Les corps 42b, 43b des vis de fixation 42, 43 passent au travers des trous de passage, 46, 47, puis des orifices débouchants 40, 41 et viennent se visser sur dans les trous taraudés 44, 45, le pontet 35 assurant ainsi la fixation de la pièce supérieure 33 et de la pièce inférieure 34 entre lesquelles il est pris en sandwich, avec la partie supérieure 21 du contour 9 du contenant 8. Lorsque la pièce supérieure 33 et la pièce inférieure 34 sont assemblées entre elles, les trois plots 50 sur la face inférieure 33a de la pièce supérieure 33 s'engagent dans les trois orifices 51 sur la face supérieure 34b de la pièce inférieure 34, ce qui assure un assemblage précis et stable entre la pièce supérieure 33 et la pièce inférieure 34 formant le corps 32.

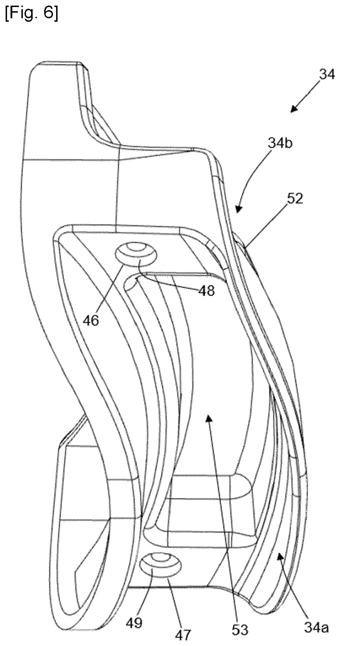

La pièce supérieure 33 comprend une face supérieure 33b présentant une forme en escalier comme l'illustrent notamment les figures 2 à 5. En outre, la pièce inférieure 34 présente une déformation 52 prononcée s'étendant en direction de la pièce supérieure 33 de manière à constituer sur la face inférieure 34a de ladite pièce inférieure 34 une cavité 53 qui s'étend vers le haut en profondeur dans le corps 32 de la seconde poignée de maintien 22, comme l'illustrent les figures 6 à 8. Tel que bien visible sur la figure 6, cette cavité 53 s'étend en profondeur dans le corps 32 en formant un renfoncement présentant une paroi périphérique. Cette cavité 53 permet d'y loger les phalanges distales et, de préférence, également les phalanges médianes des trois doigts médians (l'index, le majeur et l'annulaire) d'une main. On pourra également envisager de loger dans cette cavité 53 la phalange distale et, de préférence, également la phalange médiane, du petit doigt (l'annulaire) de la main. La forme en escalier de la face supérieure 33b de la pièce supérieure 33 permet de positionner convenablement sur celle-ci la paume de la main et le pouce lorsque les phalanges distales et médianes des doigts (index, majeur, annulaire et éventuellement auriculaire) de la main sont placées dans la cavité 53, tandis que les phalanges proximales desdits doigts se trouvent placées sur bord inférieur 54 du corps 32. Ainsi, le corps 32 de la seconde poignée de maintien 22 est convenablement empoigné, sans risque que la main vienne en contact avec le contour 9 du contenant 8 ; la seconde poignée de maintien 22 étant conçue dans une matière isolante thermiquement, le cuisinier ne peut donc pas se brûler la main. Cette matière isolante thermiquement peut notamment être choisie parmi la Bakélite^{®}, le PBT (Polybutylène Téréphtalate), le PP (Polypropylène) chargé fibres de verre. Les premières poignées de maintien 19, 20 du récipient de préparation culinaire 3 et les troisièmes poignées de maintien 24, 25 du couvercle 4 seront également conçues dans cette matière isolante thermiquement.

Selon cette conception, le cuisinier peut soulever le récipient de préparation culinaire 3 d'une main en plaçant les phalanges distales et médianes dans la cavité 53, comme indiqué ci-dessus. Le déport de la seconde poignée de maintien 22 par rapport au centre de gravité du récipient de préparation culinaire 3 et le maintien en suspension dudit récipient de préparation culinaire 3 uniquement grâce aux phalanges distales et médianes placées dans la cavité 53, permettent de basculer naturellement par gravité vers l'avant (du côté du bec verseur 23) le contenant 8 jusqu'à ce qu'il atteigne une position inclinée en équilibre telle qu'illustrée en figure 8. De préférence, dans cette position inclinée, l'inclinaison de l'axe Z du récipient de préparation culinaire 3 par rapport à un axe vertical Z1 sera compris entre soixante degrés (60°) et quatre-vingts degrés (80°), de préférence soixante-dix degrés (70°). Bien entendu, on pourra jouer sur la forme de cette cavité 53 s'étendant en profondeur dans le corps 32 de la seconde poignée de maintien 22 et sur la position de celle-ci par rapport au centre de gravité du récipient de préparation culinaire 3 afin de modifier l'inclinaison de l'axe Z du récipient de préparation culinaire 3 par rapport à l'axe vertical Z1, dans la position inclinée d'équilibre.

En fin de préparation culinaire, le cuisinier peut retirer le récipient de préparation culinaire 3 de la base 2 en le soulevant avec les deux mains grâce aux premières poignées de maintien 19, 20 et en activant les gâchettes 30, 31, ce qui lui permet de maintenir l'ouverture principale 11 du contenant 8 en position normale, sensiblement à la verticale, durant le déplacement du récipient de préparation culinaire 3. Le cuisinier aura préalablement déverrouillé et retiré le couvercle 4 du contenant 8 ; il peut toutefois le faire également après le retrait du récipient de préparation culinaire 3 de la base 2, une fois ledit récipient de préparation culinaire 3 posé sur une surface telle qu'un plan de table ou de cuisine. Selon la consistance de la préparation culinaire, liquide ou pâteuse, le cuisinier peut ensuite commencer à déverser la préparation culinaire soit en commençant par basculer le contenant 8 du côté du bec verseur 23 tout en manipulant les deux premières poignées de maintien 19, 20, soit en basculant directement ledit contenant 8 en le suspendant par la seconde poignée de maintien 22 au moyen d'une main, tel que précisé précédemment, le contenant prenant alors naturellement une position inclinée en équilibre, ce qui lui permet de manipuler une spatule avec l'autre main pour racler la paroi interne 55 et le fond 13 du contenant 8. Le cuisinier peut avantageusement placer face à lui l'ouverture principale 11 du contenant 8 lorsqu'il est suspendu d'une main et en position inclinée, ce qui lui permet de visualiser correctement la préparation culinaire dans le contenant 8 durant le raclage, sans devoir exercer des efforts avec le poignet de la main afin de pivoter ladite ouverture centrale 11 dans une position de visualisation convenable.

D'autres caractéristiques sont envisageables dans le cadre de l'invention. Par exemple, la face supérieure 33b de la pièce supérieure 33 du corps 32 peut comprendre deux repères 56, 57 et le couvercle 4 peut comprendre un repère 58 qui vient en correspondance avec l'un ou l'autre des deux repères 56, 57 sur la seconde poignée de maintien 22, afin d'indiquer la position de verrouillage et de déverrouillage du couvercle 4 sur le récipient de préparation culinaire 3.

Des variantes sont également envisageables dans le cadre de l'invention. Par exemple, on peut envisager que les deux premières poignées de maintien 19, 20 et la seconde poignée de maintien 22 soient réalisées en un seul bloc. Par exemple, les deux premières poignées de maintien 19, 20 peuvent être reliées entre elles par une pièce de pourtour (non illustrée) en demi-cercle épousant la partie supérieure 21 du contour 9 du contenant 8, la seconde poignée de maintien 22 étant agencée sur la pièce de pourtour, de préférence en partie médiane de ladite pièce de pourtour afin de positionner la seconde poignée de maintien 22 à quatre-vingt-dix degrés (90°) par rapport aux deux premières poignées de maintien 19, 20.

Le corps 32 de la seconde poignée de maintien 22 pourrait aussi être conçu en une seule pièce monobloc (non illustrée) sur la face inférieure de laquelle serait agencée la cavité 53 afin de permettre d'y loger les phalanges distales et, de préférence, également les phalanges médianes de l'index, du majeur et de l'annulaire d'une main, voire également de l'auriculaire, de telle sorte que lorsque le récipient de préparation culinaire 3 est maintenu en suspension, ledit récipient de préparation culinaire 3 vienne se positionner en équilibre avec une inclinaison selon laquelle l'axe Z forme de préférence un angle de soixante-dix degrés (70°) par rapport à l'axe vertical Z1.

La position de la seconde poignée de maintien 22 peut aussi varier par rapport à la description précédente, c'est-à-dire par rapport à la ou aux deux premières poignées de maintient 19, 20, l'important étant que cette seconde poignée de maintien 22 ne soit pas positionner face à une première poignée de maintien pour éviter que de la préparation culinaire ne se déverser sur ladite première poignée de maintien durant le déversement ou le raclage de cette préparation culinaire.

Dans la description qui précède d'un mode de réalisation, le récipient de préparation culinaire 3 constitue un élément de l'appareil de préparation culinaire 1. Bien entendu, l'invention pourrait être mise en oeuvre sur d'autres récipient de préparation culinaires de préparation culinaire pouvant être utilisés indépendamment d'une base 2, par exemple sur un autocuiseur, une marmite ou un faitout. L'invention pourrait également être mise en oeuvre avec un récipient de préparation culinaire 3 utilisé dans un appareil de préparation culinaire 1 comportant une sortie d'entrainement agencée au-dessus du récipient de préparation culinaire 3 ou s'étendant dans le récipient de préparation culinaire 3 et configurée pour recevoir un outil de travail rotatif 5 s'étendant dans le récipient de préparation culinaire 3.

## Revendications

1. Récipient de préparation culinaire (3) comprenant un contenant (8) muni d'un bord supérieur (10) définissant une ouverture principale (11) pour l'introduction d'aliments dans le contenant (8) et le retrait dudit contenant (8) de la préparation culinaire réalisée à partir des aliments, le récipient de préparation culinaire (3) comprenant au moins une première poignée de maintien (19, 20) montée sur un contour supérieur (21) du contenant (8) et configurée pour manipuler le contenant (8) en le conservant dans une position normale avec l'ouverture principale (11) placée en haut du contenant (8), ledit récipient de préparation culinaire (3) comprenant une seconde poignée de maintien (22) montée sur le contour supérieur (21) du contenant (8) et comportant un corps (32) muni d'une face inférieure (34a), la partie du contour supérieur (21) du contenant (8) disposée à l'opposé de la seconde poignée de maintien (22) étant dépourvue de l'au moins une première poignée de maintien (19, 20), **caractérisé en ce que** la face inférieure (34a) présente une cavité (53) s'étendant en profondeur dans ledit corps (32) en formant un renfoncement présentant une paroi périphérique, ladite cavité (53) étant configurée pour y loger au moins les phalanges distales, de préférence les phalanges distales et médianes, d'au moins les trois doigts médians d'une main et permettre un maintien en suspension dudit contenant (8) au moyen desdites phalanges distales, dans une position inclinée de déversement ou de raclage de la préparation culinaire.

2. Récipient de préparation culinaire (3) selon la revendication 1, lequel comprend deux premières poignées de maintien (19, 20) disposées en opposition sur le contour supérieur (21) du contenant (8).

3. Récipient de préparation culinaire (3) selon la revendication 2, dans lequel la seconde poignée de maintien (22) est disposée entre soixante degrés (60°) et cent-vingt degrés (120°), de préférence à quatre-vingt-dix degrés (90°), par rapport aux deux premières poignées de maintien (19, 20), autour du contour supérieur (21) du contenant (8).

4. Récipient de préparation culinaire selon l'une quelconque des revendications 2 ou 3, dans lequel les deux premières poignées de maintien (19, 20) sont reliées entre elles par une pièce de pourtour en demi-cercle épousant le contour supérieur (21) du contenant (8), la seconde poignée de maintien (22) étant agencée sur la pièce de pourtour.

5. Récipient de préparation culinaire (3) selon l'une quelconque des revendications 1 à 3, dans lequel la seconde poignée de maintien (22) est indépendante de l'au moins une première poignée de maintien (19, 20).

6. Récipient de préparation culinaire (3) selon la revendication 5, dans lequel le corps (32) de la seconde poignée de maintien (22) comprend une pièce supérieure (33) et une pièce inférieure (34) fixées entre elles et fixées au contour supérieur (21) du contenant (8) grâce à un système d'assemblage, la pièce inférieure (34) comprenant la cavité (53).

7. Récipient de préparation culinaire (3) selon l'une des revendications 1 à 6, dans lequel le bord supérieur (10) du contenant (8) comprend un bec verseur (23) disposé à l'opposé de la seconde poignée de maintien (22).

8. Récipient de préparation culinaire (3) selon l'une quelconque des revendications 1 à 7, dans lequel la cavité (53) sur le corps (32) de la seconde poignée de maintien (22) est configurée pour suspendre le contenant (8) avec une inclinaison comprise entre soixante degrés (60°) et quatre-vingts degrés (80°) par rapport à la verticale, de préférence soixante-dix degrés (70°) par rapport à la verticale.

9. Récipient de préparation culinaire (3) selon l'une quelconque des revendications 1 à 8, lequel comprend un couvercle (4) de fermeture apte à fermer l'ouverture principale (11) du contenant (8), un système de verrouillage étant agencé entre le couvercle (4) et l'au moins une première poignée de maintien (19, 20) pour placer le couvercle (4) dans une position verrouillée selon laquelle ledit couvercle (4) ferme l'ouverture principale (11) du contenant (8) et reste bloqué dans cette position fermée et une position déverrouillée selon laquelle le couvercle (4) peut être retiré du contenant (8) afin d'accéder à l'ouverture principale (11).

10. Récipient de préparation culinaire (3) selon la revendication 9, dans lequel un système de repérage de la position verrouillée et de la position déverrouillée du couvercle (4) est agencé entre ledit couvercle (4) et la seconde poignée de maintien (22).

11. Récipient de préparation culinaire (3) selon l'une quelconque des revendications 1 à 10, dans lequel le contenant (8) comprend un fond (13) comportant une ouverture centrale (14) apte à recevoir un organe d'entraînement en rotation (17) lui-même apte à entraîner en rotation un outil de travail rotatif (5) amovible ou non par rapport audit organe d'entraînement en rotation (17), placé dans ledit contenant (8).

12. Récipient de préparation culinaire (3) selon l'une quelconque des revendications 1 à 11, dans lequel le contenant (8) est conçu dans une matière métallique, si désiré revêtue, de préférence en acier inoxydable, ou encore en alliage d'aluminium revêtu, par exemple de PTFE, l'au moins une première poignée de maintien (19, 20) et la seconde poignée de maintien (22) étant conçues dans une matière isolante thermiquement, de préférence en Bakélite^{®}, en PBT ou en PP chargé fibres de verre.

13. Appareil de préparation culinaire (1), lequel comprend un récipient de préparation culinaire (3) présentant les caractéristiques de l'une quelconque des revendications 1 à 12 et une base (2) configurée pour réceptionner le récipient de préparation culinaire (3).

14. Appareil de préparation culinaire (1) selon la revendication 13 rattachée aux revendications 11 et 12, lequel comprend au moins un outil de travail rotatif (5) apte à être placé dans le contenant (8) en l'introduisant par son ouverture principale (11) et un organe d'entraînement en rotation (17) apte à être monté de manière étanche sur l'ouverture centrale (14) du fond (13) du contenant (8) pour entraîner l'outil de travail rotatif (5) placé dans ledit contenant (8), l'appareil de préparation culinaire (1) comprenant un dispositif de chauffe du fond (13) du contenant (8) et un dispositif d'entrainement en rotation de l'organe d'entraînement en rotation (17) monté sur ledit fond (13), lorsque le récipient de préparation culinaire (3) est monté sur ladite base (2).

## Patentansprüche

1. Lebensmittelzubereitungsgefäß (3), umfassend einen Behälter (8), der mit einer oberen Kante (10) ausgestattet ist, die eine Hauptöffnung (11) für die Einführung von Lebensmitteln in den Behälter (8) und die Entnahme der ausgehend von den Lebensmitteln erstellten Lebensmittelzubereitung aus dem Behälter (8) definiert, wobei das Lebensmittelgefäß (3) mindestens einen ersten Haltegriff (19, 20) umfasst, der auf einem oberen Umfang (21) des Behälters (8) angebracht ist und konfiguriert ist, um den Behälter (8) zu handhaben, indem dieser in einer normalen Position bewahrt wird, mit der Hauptöffnung (11) auf der Oberseite des Behälters (8) platziert, wobei das Lebensmittelzubereitungsgefäß (3) einen zweiten Haltegriff (22) umfasst, der auf dem oberen Umfang (21) des Behälters (8) angebracht ist, und einen Körper (32) umfasst, der mit einer unteren Seite (34a) ausgestattet ist wobei der Teil des oberen Umfangs (21) des Behälters (8), der gegenüber dem zweiten Haltegriff (22) angeordnet ist, ohne den mindestens einen ersten Haltegriff (19, 20) ist, **dadurch gekennzeichnet, dass** die untere Seite (34a) einen Hohlraum (53) aufweist, der sich im Körper (32) in die Tiefe erstreckt, indem er eine Verstärkung bildet, die eine Umfangswand bildet, wobei der Hohlraum (53) konfiguriert ist, um dort mindestens die distalen Fingerglieder, vorzugsweise die distalen und mittleren Fingerglieder, der mindestens drei mittleren Finger einer Hand unterzubringen und eine Hängehaltung des Behälters (8) mittels der distalen Fingerglieder in einer geneigten Position des Ausgießens oder des Ausschälens der Lebensmittelzubereitung zu ermöglichen.

2. Lebensmittelzubereitungsgefäß (3) nach Anspruch 1, das zwei erste Haltegriffe (19, 20) umfasst, die gegenüberliegend auf dem oberen Umfang (21) des Behälters (8) angeordnet sind.

3. Lebensmittelzubereitungsgefäß (3) nach Anspruch 2, wobei der zweite Haltegriff (22) zwischen sechzig Grad (60°) und hundertzwanzig Grad (120°), vorzugsweise bei neunzig Grad (90°), in Bezug auf die zwei ersten Haltegriffe (19, 20) um den oberen Umfang (21) des Behälters (8) angeordnet ist.

4. Lebensmittelzubereitungsgefäß nach einem der Ansprüche 2 oder 3, wobei die zwei ersten Haltegriffe (19, 20) durch ein halbkreisförmiges Umrandungsstück, das an den oberen Umfang (21) des Behälters (8) angepasst ist, miteinander verbunden sind, wobei der zweite Haltegriff (22) auf dem Umrandungsstück eingerichtet ist.

5. Lebensmittelzubereitungsgefäß (3) nach einem der Ansprüche 1 bis 3, wobei der zweite Haltegriff (22) unabhängig von dem mindestens einen ersten Haltegriff (19, 20) ist.

6. Lebensmittelzubereitungsgefäß (3) nach Anspruch 5, wobei der Körper (32) des zweiten Haltegriffs (22) ein oberes Stück (33) und ein unteres Stück (34) umfasst, die mithilfe eines Zusammenbausystems aneinander befestigt sind und am oberen Umfang (21) des Behälters (8) befestigt sind, wobei das untere Stück (34) den Hohlraum (53) umfasst.

7. Lebensmittelzubereitungsgefäß (3) nach einem der Ansprüche 1 bis 6, wobei die obere Kante (10) des Behälters (8) einen Ausgießer (23) umfasst, der gegenüber dem zweiten Haltegriff (22) angeordnet ist.

8. Lebensmittelzubereitungsgefäß (3) nach einem der Ansprüche 1 bis 7, wobei der Hohlraum (53) auf dem Körper (32) des zweiten Haltegriffs (22) konfiguriert ist, um den Behälter (8) mit einer Neigung zwischen sechzig Grad (60°) und achtzig Grad (80°) in Bezug zur Vertikalen, vorzugsweise siebzig Grad (70°) in Bezug zur Vertikalen zu hängen.

9. Lebensmittelzubereitungsgefäß (3) nach einem der Ansprüche 1 bis 8, das einen Deckel (4) zum Verschließen umfasst, der geeignet, die Hauptöffnung (11) des Behälters (8) zu verschließen, wobei ein Verriegelungssystem zwischen dem Deckel (4) und dem mindestens einen ersten Haltegriff (19, 20) eingerichtet ist, um den Deckel (4) in einer verriegelten Position, bei der der Deckel (4) die Hauptöffnung (11) des Behälters (8) verschließt und in dieser geschlossenen Position arretiert ist, und einer entriegelten Position zu platzieren, bei der der Deckel (4) vom Behälter (8) entnommen werden kann, um auf die Hauptöffnung (11) zuzugreifen.

10. Lebensmittelzubereitungsgefäß (3) nach Anspruch 9, wobei ein Markierungssystem der verriegelten Position und der entriegelten Position des Deckels (4) zwischen dem Deckel (4) und dem zweiten Haltegriff (22) eingerichtet ist.

11. Lebensmittelzubereitungsgefäß (3) nach einem der Ansprüche 1 bis 10, wobei der Behälter (8) einen Boden (13) umfasst, der eine mittlere Öffnung (14) umfasst, die geeignet ist, ein Drehantriebselement (17) aufzunehmen, das selbst geeignet ist, ein abnehmbares oder nicht abnehmbares drehbares Arbeitswerkzeug (5), das im Behälter (8) platziert ist, in Bezug auf das Drehantriebselement (17) in Drehung zu versetzen.

12. Lebensmittelzubereitungsgefäß (3) nach einem der Ansprüche 1 bis 11, wobei der Behälter (8) aus einem metallischen Material konzipiert ist, falls gewünscht beschichtet, vorzugsweise aus Edelstahl, oder einer beschichteten Aluminiumlegierung, zum Beispiel PTFE, wobei der mindestens eine erste Haltegriff (19, 20) und der zweite Haltegriff (22) aus einem wärmeisolierendem Material, vorzugsweise aus Bakelit^{®}, aus PBT oder aus mit Glasfasern verstärktem PP konzipiert ist.

13. Gerät zur Lebensmittelzubereitung (1), umfassend ein Lebensmittelzubereitungsgefäß (3), das die Merkmale einer der Ansprüche 1 bis 12 aufweist, und eine Basis (2), die konfiguriert ist, um das Lebensmittelzubereitungsgefäß (3) zu empfangen.

14. Gerät zur Lebensmittelzubereitung (1) nach Anspruch 13, in Verbindung mit den Ansprüchen 11 und 12, die mindestens ein drehendes Arbeitswerkzeug (5) umfasst, das geeignet ist, im Behälter (8) platziert zu werden, indem es durch dessen Hauptöffnung (11) eingeführt wird, und ein Drehantriebselement (17), das geeignet ist, auf der mittleren Öffnung (14) des Bodens (13) des Behälters (8) auf dichte Weise angebracht zu werden, um das drehende Arbeitswerkzeug (5), das im Behälter (8) platziert ist, anzutreiben, wobei das Gerät zur Lebensmittelzubereitung (1) eine Bodenheizungsvorrichtung (13) des Behälters (8) und eine Drehantriebsvorrichtung des Drehantriebselements (17) umfasst, die auf dem Boden (13) angebracht ist, wenn das Lebensmittelzubereitungsgefäß (3) auf der Basis (2) angebracht ist.

## Claims

1. Food preparation vessel (3) comprising a container (8) provided with an upper edge (10) defining a main opening (11) for introducing food into the container (8) and removing the obtained food preparation from said container (8), the food preparation vessel (3) comprising at least one first holding handle (19, 20) mounted on an upper contour (21) of the container (8) and configured to handle the container (8), keeping it in a normal position with the main opening (11) positioned at the top of the container (8), said food preparation vessel (3) comprising a second holding handle (22) mounted on the upper contour (21) of the container (8) and comprising a body (32) provided with a lower face (34a), the part of the upper contour (21) of the container (8) disposed opposite the second holding handle (22) having none of the at least one first holding handle (19, 20), **characterized in that** the lower face (34a) has a cavity (53) extending depthwise into said body (32), by forming a reinforcement having a peripheral wall, said cavity (53) being configured to accommodate at least the distal phalanges, preferably the distal and middle phalanges, of at least the three middle fingers of one hand and to allow the container (8) to be held, suspended by means of said distal phalanges, in a tilted position for pouring or scraping out the food preparation.

2. Food preparation vessel (3) according to claim 1, which comprises two first holding handles (19, 20) disposed opposite one another on the upper contour (21) of the container (8).

3. Food preparation vessel (3) according to claim 2, wherein the second holding handle (22) is disposed between sixty degrees (60°) and one hundred and twenty degrees (120°), preferably ninety degrees (90°), with respect to the two first holding handles (19, 20), around the upper contour (21) of the container (8).

4. Food preparation vessel according to any one of claims 2 or 3, wherein the two first holding handles (19, 20) are connected to one another by a semi-circular perimeter part molding the upper contour (21) of the container (8), the second holding handle (22) being arranged on the perimeter part.

5. Food preparation vessel (3) according to any one of claims 1 to 3, wherein the second holding handle (22) is independent from the at least one first holding handle (19, 20).

6. Food preparation vessel (3) according to claim 5, wherein the body (32) of the second holding handle (22) comprises an upper part (33) and a lower part (34) fixed to one another and fixed to the upper contour (21) of the container (8) thanks to an assembly system, the lower part (34) comprising the cavity (53).

7. Food preparation vessel (3) according to one of claims 1 to 6, wherein the upper edge (10) of the container (8) comprises a pouring spout (23) disposed opposite the second holding handle (22).

8. Food preparation vessel (3) according to one of claims 1 to 7, wherein the cavity (53) on the body (32) of the second holding handle (22) is configured to suspend the container (8) with a tilt of between sixty degrees (60°) and eighty degrees (80°) with respect to the vertical, preferably seventy degrees (70°) with respect to the vertical.

9. Food preparation vessel (3) according to any one of claims 1 to 8, which comprises a closing lid (4) capable of closing the main opening (11) of the container (8), a locking system being arranged between the lid (4) and the at least one first holding handle (19, 20) to position the lid (4) in a locked position, according to which, said lid (4) closes the main opening (11) of the container (8) and remains blocked in this closed position and an unlocked position, according to which, the lid (4) can be removed from the container (8) in order to access the main opening (11).

10. Food preparation vessel (3) according to claim 9, wherein a system for identifying the locked position and the unlocked position of the lid (4) is arranged between said lid (4) and the second holding handle (22).

11. Food preparation vessel (3) according to any one of claims 1 to 10, wherein the container (8) comprises a bottom (13) comprising a central opening (14) capable of receiving a rotary drive member (17), itself capable of rotating a rotary work tool (5), which is removable or not with respect to said rotary drive member (17), positioned in said container (8).

12. Food preparation vessel (3) according to any one of claims 1 to 11, wherein the container (8) is designed in a metal material, coated if desired, preferably made of stainless steel, or also made of coated aluminum alloy, for example PTFE, the at least one first holding handle (19, 20) and the second holding handle (22) being designed in a thermally insulating material, preferable made of Bakélite^{®}, of PBT or of glass fiber-filled PP.

13. Food preparation appliance (1), which comprises a food preparation vessel (3) having the features of any one of claims 1 to 12, and a base (2) configured to receive the food preparation vessel (3).

14. Food preparation appliance (1) according to claim 13 connected to claims 11 and 12, which comprises at least one rotary work tool (5) capable of being positioned in the container (8), by introducing it through its main opening (11) and a rotary drive member (17) capable of being sealingly mounted on the central opening (14) of the bottom (13) of the container (8) to drive the rotary work took (5) positioned in said container (8), the food preparation appliance (1) comprising a device for heating the bottom (13) of the container (8), and a device for rotatably driving the rotary drive member (17) mounted on said bottom (13), when the food preparation vessel (3) is mounted on said base (2).
